# EUROPEAN PATENT SPECIFICATION

(11) **EP 1 530 325 B1**
(45) Date of publication and mention of the grant of the patent: **04.04.2007**
(21) Application number: 03292791.5
(22) Date of filing: 06.11.2003
(51) Int. Cl.: H04L 12/56

(54) **Method and device for managing a shared transmission medium**
Verfahren und Vorrichtung zur Verwaltung von einem gemeinsamen Übertragungsmittel
Méthode et dispositif pour gérer un moyen de transmission partagé

(43) Date of publication of application: 11.05.2005
(73) Proprietor: MITSUBISHI DENKI KABUSHIKI KAISHA, Chiyoda-ku Tokyo 100-8310 (JP); Mitsubishi Electric Information Technology Center Europe B.V., 1119 NS Schiphol Rijk, Amsterdam (NL)
(72) Inventor: Mangin, Christophe, 35590 l'Hermitage (FR); Rollet, Romain, 35000 Rennes (FR)
(74) Representative: Verdure, Stéphane

(56) References cited:
- WO-A-03/063415
- WO-A-03/077483

## Description

### BACKGROUND OF THE INVENTION

### 1. Technical Field

The present invention relates generally to communication systems and in particular, to a method for managing a shared transmission medium between a plurality of stations in a wireless local area network having an Access Point (AP).

### 2. Related Art

In recent years, the IEEE 802.11 Standard, herein after referred to as "the Standard", has emerged to propose specifications for the WLAN, with a Medium Access Control (MAC) part of the standard defining a MAC layer and a PHYsical (PHY) part of the standard defining a Physical layer. The IEEE 802.11 Standard is now frequently implemented, wherein MAC frames are created according to the MAC part of the Standard, and are encapsulated into Physical packets according to the PHY part of the Standard, which packets are emitted via the air interface. The MAC part of the Standard specifies a MAC layer which can relay on every Physical layer also defined by the standard and controls the transmission of user data into the air in order to share a common transmission medium between stations of a network.

The MAC part of the Standard defines two medium access schemes: a Distributed Coordination Function (DCF) and a Point Coordination Function (PCF). Stations listen to the medium and decode all MAC frames during the DCF and the PCF. The DCF is based on a contention access scheme and it is implemented at the station level. The PCF, which is optional according to the Standard, provides a contention free access based on a centralised polling access scheme. It uses an Access Point (AP) somewhere in the network, which centralizes the managing of access to the medium by all stations in the network.

The DCF uses the standard Carrier Sense Multiple Access with Collision Avoidance (CSMA/CA) access mechanism. Before attempting to transmit, each station checks whether the medium is idle. If the medium is not idle, the station defers transmission by handling an orderly exponential back-off algorithm to avoid collision. When DCF stations are not transmitting, they are listening to the medium to receive every data frames transmitted and they ignore these data frames which are not intended for them. This access scheme provides a best effort service and it cannot guarantee a transmission delay upper bounded for real time applications.

In comparison, the PCF allows to better control the transmission delay, which is required by some applications. According to the MAC part of the Standard, the PCF is a function of the AP which ensures that the medium is provided without contention to all stations compatible with this type of medium access, through an "enforced" access to the medium. To separate the DCF and the PCF access schemes, the MAC part of the Standard introduces some distinct time periods reserved for one of those access schemes: a Contention Free Period (CFP) managed according to the PCF and a Contention Period (CP) managed according to the DCF.

A Beacon frame, which is a specific management frame defined in the MAC part of the Standard, is periodically emitted by the AP. The time period between two consecutive Beacon frames is called a Superframe in what follows. Each occurrence of a Beacon frame indicates the beginning of a CFP. Each Beacon frame includes information on the respective length of the CFP and of the CP.

The Beacon frames are listened to by all stations in the network, whatever the access medium scheme they use. Then, each station is informed about CFP and CP. The PCF is based on a polling list method. The AP manages a polling list of stations compatible with PCF, which are not allowed to transmit during the CFP, until the reception of a polling frame received from the AP. Each polling frame, which contains a MAC address of a given station, allows this station to transmit one frame. A station can transmit more than one frame only if it receives respective polling frames. The CFP is long enough for allowing the transfer of at least one frame of maximum size and of its associated acknowledgement. During the CFP, the medium access according to the DCF is locked out.

In the IEEE 802.11 Standard extensions, other access methods are defined but are always derived from the PCF or the DCF. For instance, 802.11 e defines the Hybrid Coordination Function (HCF) mode that implements an Enhancement Distributed Channel Access (EDCA) and a HCF Control Channel Access (HCCA) schemes. EDCA is based on a contention access scheme with different priority levels and is implemented during the CP. Consequently, it provides a best effort data transmission without any guarantee on transmission delay. HCCA shares the CFP with the PCF access scheme and is also based on a polling access scheme. This latter generates an important signalling overhead. As a polling frame can be received at a given station at any time during the CFP, it results from this the following disadvantages: a more complex Physical layer which has to perform synchronisation on each polling frame reception and a less efficient implementation of a power saving function.

The document WO 03/063415 discloses a method for sharing a transmission medium among a plurality of stations by managing a Superframe which is split into a plurality of time periods. But, such a scheme does not provide a medium access allowing a contention access period and a contention free access period with real time characteristics.

The document WO 03/077483 discloses a method for performing fast channel switching in a wireless local area. A busy interval represents the time period during which the wireless medium is used by one of the network stations. After such a busy interval, an access scheme based on a Point Coordination Function (PCF) is performed. Such a scheme presents same drawbacks as described above, preferring to PCF scheme.

### SUMMARY OF THE INVENTION

In view of the foregoing, there is a need for a medium access scheme allowing a WLAN network to support protocols providing data transmission with higher throughput and better real-time characteristics, without using a polling access scheme.

A first aspect of the invention thus proposes a method for managing a shared transmission medium between a plurality of stations in a wireless local area network having an Access Point (AP), the method comprising the steps of:
- said AP transmitting to all stations substantially periodic management frames, a SuperFrame being defined as the time period between two consecutives management frames.
- splitting said SuperFrame into a plurality of time periods, which time periods correspond to respective access schemes, according to a management information comprised in said management frame, said SuperFrame comprising:
   - a first time period corresponding to a contention free access scheme,
   - a second time period corresponding to a contention access scheme,
wherein said first time period comprises a Time Frame (TF) having N synchronous Frame Time Interval(s) (FTI) (23), each having a same duration D, wherein N and D are comprised in the management information, transmitted by the AP to the stations, N being a positive integer.

A second aspect of the invention relates to a device for managing a shared transmission medium between a plurality of stations in a wireless local area network, the device comprising:
- means to transmit to all stations substantially periodic management frames, a SuperFrame being defined as the time period between the beginning of a management frame and the beginning of the next management frame
- means to split said SuperFrame into a plurality of time periods, which time periods correspond to respective access schemes, according to a management information comprised in said management frame, said SuperFrame comprising:
   - a first time period corresponding to a contention free access scheme,
   - a second time period corresponding to a contention access scheme,
wherein said first time period comprises a Time Frame (TF) having N synchronous Frame Time Interval(s) (FTI) (23), each having a same duration D, wherein N and D are comprised in the management information, transmitted by the AP to the stations, N being a positive integer.

In a preferred embodiment, the TF comprises a given number N of FTis of same duration D. Of course, the duration of the TF shall be shorter than the duration of the first time period.

### BRIEF DESCRIPTION OF THE DRAWINGS

Further features and advantages of the present invention will become more apparent from the description below. The latter is given purely by way of illustration and should be read in conjunction with the appended drawings, of which:
- Figure 1 illustrates an exemplary SuperFrame structure with two different time periods being the CP and the CFP as defined in the Standard.
- Figure 2 shows an exemplary of the TF structure according to the invention.

### DESCRIPTION OF PREFERRED EMBODIMENTS

An exemplary embodiment of the invention is described herein below as an enhancement of the IEEE 802.11 Standard. The invention is however applicable to any wireless local area network including an Access Point and a plurality of stations. Use of the invention is compliant with the current MAC part of the Standard, so that stations using PCF/DCF/HCF access schemes can inter work in the same network.

As the invention is based on the MAC part of the Standard, the following section first remind basic concept useful to correctly understand the enhancement proposed herein.

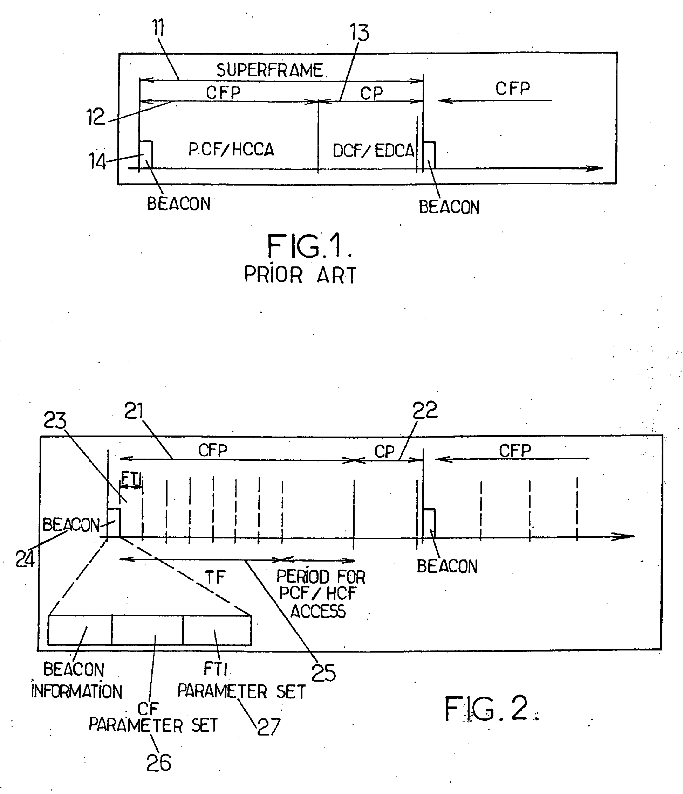

For the sake of better understanding, Figure 1 illustrates different time periods defined in the Standard. The Beacon frame 14 is periodically emitted by the AP to indicate the beginning of one SuperFrame, and the beginning of the CFP thereof. The time interval between two consecutive Beacon frames 14 defines a SuperFrame 11 and it contains one CFP 12 followed by one CP 13.

The Beacon frame 14 must be listened to by all the stations: this Beacon frame indicates to all stations the length of the CPF, the SuperFrame duration, already defined above, and the AP capabilities. All stations decode the Beacon frame. Stations using exclusively the DCF access medium scheme are not allowed to emit during the CFP. Consequently, they do not generate interference and errors during this period. The SuperFrame duration is a static parameter of network configuration, as described in the IEEE 802.11 standard. On the contrary, the CFP 12 duration is variable and is determined by the PCF for each SuperFrame 11. A CFP is not mandatory in a SuperFrame, therefore the CFP duration may be nil. As the AP sends all Beacon frames at a periodic substantially fixed time, the SuperFrame and consequently the CFPs always start at a somehow expected time.

The current MAC part of the Standard (see in particular Edition 1999, section 7.1.2 and 7.1.3.1 page 34) describes the general MAC frame format, which depicts a set of fields that occur in a fixed order in all MAC frames. It includes a frame control field comprising a Protocol Version subfield. The stations check this subfield in each received data frame in order to determine if they can interpret it. Therefore, different MAC protocols can be supported inside an IEEE 802.1 Standard network, when this Protocol Version subfield is correctly used.

The invention suggests modifying the SuperFrame and the Beacon frame format defined in the MAC part of the Standard. These modifications guaranty the compatibility with the medium access schemes (DCF/PCF/HCF) defined by the Standard.

According to the Standard (see in particular the 1999 Edition, section 7.2.3.1 page 46, table 5), a Beacon frame contains some fixed length fields which are mandatory and some variable length fields which are inserted only if the AP supports a particular function. Such fields are named Information Element (IE) in the MAC part of the Standard and exhibit the following common format:
- Element Identifier (1 byte)
- variable length of value L in bytes (1 byte)
- information of variable length (L bytes).

Thanks to this format, the Beacon frame is able to support and include new IEs in order to describe some future capabilities defined in the MAC Layer protocol extensions.

In one embodiment of the invention, the Beacon frame format is changed in order to allow the PCF to inform the stations about TF characteristics on a Superframe basis.

Figure 2 illustrates one example of the SuperFrame structure according to the invention. In this example, CFP 21 and CP 22 are two consecutive time periods which form the SuperFrame, according to the MAC part of the Standard. Here, the CFP 21 includes a TF period 25 with at least one synchronous FTI 23. The AP may thus manage the shared transmission medium according to a synchronous TF access scheme during the TF period 25. Only stations which are able to use the TF access scheme are allowed to use the TF period 25 for data transmission. The following details explain how it is ensured. As TF is included in CFP, all stations using exclusively the DCF access scheme are not allowed to emit during the TF. In addition, since the AP does not send any polling frames during the TF 25, all stations using PCF access, but not TF access, will not receive any polling frame, and therefore they will never emit during the TF. The TF is then not disturbed with DCF or PCF access scheme.

In one preferred embodiment, the TF is composed exclusively of a set of a given number N of consecutive synchronous FTIs. The N FTIs in a given Superframe have the same duration D. The number N of FTIs in a given SuperFrame and the duration D of each FTI are fixed on a per SuperFrame basis. Stated otherwise, N and D may vary from one SuperFrame to another.

Compared to current MAC part of the Standard (Edition 1999), the Beacon frame format is extended in order to include a new Information Element, namely the FTI Parameter Set 27, which comprises the following fields:
- TF Element Identifier (1 byte)
- the length of the FTI Parameter Set field (1 byte)
- the number N of FTIs in a TF (1 byte)
- the FTI duration, in µs (2 bytes)
- K bytes for additional protocol information used within the FTI, K being a variable value which depends on the protocol used in the FTI. It is important to note here that the protocol used in the FTIs can be different from protocol described in the MAC part of the standard. As it has been already described above, if the Protocol Version subfield included in all MAC frames is filled in with a specific value different from values which have been already reserved in the MAC part of the Standard, any MAC protocols can be used inside the FTIs. All stations which implement the MAC part of the Standard and its current extensions must ignore the frames with a Protocol Version subfield that they are not able to recognise as a valid value. Accordingly, such a format prevents stations not able to use the TF access scheme from handling and wrongly interpreting frames sent in a given FTI according to any protocols that they do not support. In the MAC part of the Standard the value 0 is the only reserved for Protocol Version subfield value.

Specifying the additional protocol information would extend beyond the scope of the present description.

Of course, the Beacon frame format includes also CF parameter Set 26 as it is defined in the MAC part of the Standard, when the AP includes a PCF. The CF parameter set contains the set of parameters necessary to support the PCF and notably the CFPMaxDuration which indicates the maximum duration of the CFP that may be generated by the PCF. The CF parameter set has the following format:
- CF Element identifier (1 byte)
- the length L of the information field (1 byte)
- the information field (L bytes)

In one embodiment, the TF Element Identifier field contains a specific element identifier value reserved among the unused values defined in the Standard. This value is used to guaranty compatibility between all medium access schemes of the standard: all stations decode the Beacon frame and check the value of this specific element identifier. Either they support this value, meaning they are able to use the TF access scheme; or they do not support it and they ignore all data transmitted during the TF period. In any case, stations which are compliant with the MAC part of the Standard support the TF as it is explained in detail below.

When a station of the network decodes a Beacon frame received from the AP, it checks the CF Element Identifier value. When the station is only able to use the DCF access scheme, the station switches to a listening only mode, until the end of the CFP. Else if the station does not recognise the TF Element Identifier value, the station can still listen during the CFP including the TF, also it will not receive any polling frame until the end of the TF. In addition, the Protocol Version subfield value used in the TF prevents it from handling and wrongly interpreting messages.

According to the invention, the AP is in charge of determining for each SuperFrame the value N and the duration D to define the TF.

In one preferred embodiment, stations can communicate their transmission requirements to the AP. The AP takes into account this information in order to determine N and D dynamically using a specific algorithm to achieve the station requirements.

To summarize, the invention provides a method to introduce a more efficient MAC protocol based on time frame of fixed duration like TDMA/TDD service and provides respective advantages. Consequently, the TF access scheme can help to provide a transmission service more adapted to real time applications due to a substantially synchronous transmission. During the TF, the synchronisation at the PHY layer can be simplified. Most of the synchronisation is performed at the Beacon frame reception. Moreover, the invention may reduce signalling overhead compared to signalling overhead generated with a polling access scheme.

In addition to this, the invention is compatible with the medium access functions defined by the current MAC part of the Standard.

According to a further advantage, the invention provides a method to share dynamically the medium between different MAC protocols according to the requirements of the applications running on respective stations. The invention allows to implement any protocols during the TF: the flexibility of the MAC part of the Standard is hereby increased. The SuperFrame and the Beacon format according to the invention make the AP able to allocate transmission resource to the different implemented access schemes depending on the station capabilities and their applications, the TF transmission resource being preferably allocated to the real time applications

## Claims

1. A method for managing a shared transmission medium between a plurality of stations in a wireless local area network having an Access Point further referred to as AP, the method comprising the steps of:
- said AP transmitting to all stations periodic management frames, a SuperFrame (11) being defined as the time period between the beginning of a management frame and the beginning of the next management frame,
- splitting said SuperFrame into a plurality of time periods, which time periods correspond to respective access schemes, according to a management information comprised in said management frame, said SuperFrame comprising:
- a first time period corresponding to a contention free access scheme,
- a second time period corresponding to a contention access scheme,
wherein said first time period comprises a Time Frame (TF) (25) having N synchronous Frame Time Interval(s) (FTI) (23)each having a same duration D, wherein N and D are comprised in the management information, transmitted by the AP to the stations, N being a positive integer.

2. The method according to claim 1, wherein N and/or D of FTIs are determined by the AP for each SuperFrame (11), each according to a respective algorithm running in the AP.

3. The method according to claim 2, wherein the algorithm of the AP takes into account transmission requirements received from the respective stations, in order to determine D and/or N.

4. The method according to any one of the preceding claims, wherein the TF is located at the beginning of the Superframe (11), directly after the management frame transmission.

5. The method according to any one of the preceding claims, wherein a protocol A is used during the SuperFrame (11), except during the TF (25) for which a protocol B is used, protocol A and protocol B being different.

6. The method according to claim 5, wherein the plurality of stations includes IEEE Standard 802.11 compliant stations and wherein the protocol A and the protocol B are different versions of said IEEE Standard 802.11.

7. The method according to claim 6, wherein the FTI information element included in the management frame comprises a specific element identifier, which is different from these defined by 802.11 standard.

8. The method according to claim 6 or 7, wherein the first time period includes a time period managed by a Point Coordination Function (PCF) access mechanism as defined by the IEEE Standard 802.11.

9. The method according to claim 6, 7 or 8, wherein the first time period includes a time period managed by a Hybrid Coordination Function (HCF) access mechanism as defined by the 802.11 standard.

10. The method according to claim 9, wherein stations do not manage any message received through the shared transmission medium during the TF (25) when they do not recognise the specific element identifier and/or do not support the protocol version corresponding to said message.

11. The method according to any one of the preceding claims, wherein the AP distributes dynamically transmission resource between the different supported access schemes according to the characteristics of the different transmission requirements.

12. A device for managing a shared transmission medium between a plurality of stations in a wireless local area network, the device comprising:
- means to transmit to all stations periodic management frames, a SuperFrame (11) being defined as the time period between the beginning of a management frame and the beginning of the next management frame,
- means to split said SuperFrame (11) into a plurality of time periods, which time periods correspond to respective access schemes, according to a management information comprised in said management frame, said SuperFrame comprising:
- a first time period corresponding to a contention free access scheme,
- a second time period corresponding to a contention access scheme,
wherein said first time period comprises a Time Frame (TF) (25) having N synchronous Frame Time Interval(s) (FTI) (23), each having a same duration D, wherein N and D are comprised in the management information, transmitted by the AP to the stations, N being a positive integer.

## Patentansprüche

1. Verfahren zum Verwalten eines gemeinsamen Übertragungsmediums zwischen einer Vielzahl von Stationen in einem drahtlosen lokalen Netz mit einem Zugangspunkt, im Weiteren ZP genannt, wobei das Verfahren die folgenden Schritte umfasst:
- Übertragen periodischer Verwaltungs-Frames an alle Stationen durch den ZP, wobei ein SuperFrame (11) als Zeitabschnitt zwischen dem Beginn eines Verwaltungs-Frames und dem Beginn des nächsten Verwaltungs-Frames definiert ist,
- Splitten des SuperFrames in eine Vielzahl von Zeitabschnitten, wobei die Zeitabschnitte den jeweiligen Zugangsschemata entsprechen, gemäß einer Verwaltungsinformation, die in dem Verwaltungs-Frame enthalten ist, wobei der SuperFrame aufweist:
- einen ersten Zeitabschnitt, der einem konkurenzfreien (contention free) Zugangsschema entspricht;
- einen zweiten Zeitabschnitt, der einem Konkurrenz (contention) - Zugangsschema entspricht,
wobei der erste Zeitabschnitt einen Time Frame (TF) (25) mit N synchronen Frame-Zeitintervallen (FTI) (23) von jeweils gleicher Dauer D aufweist, wobei N und D in der Verwaltungsinformation enthalten sind, die von dem ZP an die Stationen übertragen wird, wobei N eine positive ganze Zahl ist.

2. Verfahren nach Anspruch 1, wobei N und/oder D der Frame-Zeitintervalle durch den ZP für jeden SuperFrame (11) bestimmt werden, jeweils gemäß einem entsprechenden Algorithmus, der in dem ZP läuft.

3. Verfahren nach Anspruch 2, wobei der Algorithmus des ZP Übertragungsanforderungen berücksichtigt, die von den jeweiligen Stationen empfangen werden, um D und/oder N zu bestimmen.

4. Verfahren nach einem der vorhergehenden Ansprüche, wobei sich der Time Frame am Beginn des SuperFrames (11) befindet, direkt nach der Verwaltungs-Frame Übertragung.

5. Verfahren nach einem der vorhergehenden Ansprüche, wobei ein Protokoll A während des SuperFrames (11) verwendet wird, mit Ausnahme während des Time Frames (25), für den ein Protokoll B verwendet wird, wobei Protokoll A und Protokoll B unterschiedlich sind.

6. Verfahren nach Anspruch 5, wobei die Vielzahl von Stationen IEEE Standard 802.11 konforme Stationen aufweist, und wobei das Protokoll A und das Protokoll B unterschiedliche Versionen des IEEE Standard 802.11 sind.

7. Verfahren nach Anspruch 6, wobei das in dem Verwaltungs-Frame enthaltene Frame-Zeitintervall-Informationselement einen spezifischen Elementkennzeichner aufweist, der sich von den durch den 802.11 Standard definierten unterscheidet.

8. Verfahren nach Anspruch 6 oder 7, wobei der erste Zeitabschnitt einen Zeitabschnitt aufweist, der von einem Point Coordination Function (PCF) - Zugangsmechanismus, wie er durch den IEEE Standard 802.11 definiert ist, verwaltet wird.

9. Verfahren nach Anspruch 6, 7 oder 8, wobei der erste Zeitabschnitt einen Zeitabschnitt aufweist, der von einem Hybrid Coordination Function (HCF) - Zugangsmechanismus, wie er durch den IEEE Standard 802.11 definiert ist, verwaltet wird.

10. Verfahren nach Anspruch 9, wobei Stationen keine Nachrichten verwalten, die während des Time Frames (25) durch das gemeinsame Übertragungsmedium empfangen worden sind, wenn sie den spezifischen Elementkennzeichner nicht erkennen und/oder die Protokollversion, die der Nachricht entspricht, nicht unterstützen.

11. Verfahren nach einem der vorhergehenden Ansprüche, wobei der ZP dynamisch Übertragungsressourcen zwischen den verschiedenen unterstützten Zugangsschemata gemäß den Eigenschaften der verschiedenen Übertragungserfordernisse verteilt.

12. Vorrichtung zum Verwalten eines gemeinsamen Übertragungsmediums zwischen einer Vielzahl von Stationen in einem drahtlosen lokalen Netz, wobei die Vorrichtung aufweist:
- Mittel zum Übertragen periodischer Verwaltungs-Frames an alle Stationen, wobei ein SuperFrame (11) als Zeitabschnitt zwischen dem Beginn eines Verwaltungs-Frames und dem Beginn des nächsten Verwaltungs-Frames definiert ist,
- Mittel zum Splitten des SuperFrames (11) in eine Vielzahl von Zeitabschnitten, wobei die Zeitabschnitte den jeweiligen Zugangsschemata entsprechen, gemäß einer Verwaltungsinformation, die in dem Verwaltungs-Frame enthalten ist, wobei der SuperFrame aufweist:
- einen ersten Zeitabschnitt, der einem konkurenzfreien (contention free) Zugangsschema entspricht;
- einen zweiten Zeitabschnitt, der einem Konkurrenz (contention) - Zugangsschema entspricht,
wobei der erste Zeitabschnitt einen Time Frame (TF) (25) mit N synchronen Frame-Zeitintervallen (FTI) (23) von jeweils gleicher Dauer D aufweist, wobei N und D in der Verwaltungsinformation enthalten sind, die von dem ZP an die Stationen übertragen wird, wobei N eine positive ganze Zahl ist.

## Revendications

1. Un procédé pour gérer un support de transmission partagé entre une multiplicité de stations dans un réseau local sans fil ayant un Point d'Accès encore appelé AP (Access Point), le procédé comprenant les étapes suivantes :
- l'AP émet vers toutes les stations des trames de gestion périodiques, une Super-Trame (11) étant définie comme l'intervalle entre le début d'une trame de gestion et le début de la trame de gestion suivante,
- on divise la Super-Trame en une multiplicité d'intervalles de temps, chaque intervalle de temps correspondant à des techniques d'accès respectives, conformément à une information de gestion contenue dans ladite trame de gestion, la Super-Trame comprenant :
- un premier intervalle de temps correspondant à une technique d'accès sans collision,
- un deuxième intervalle de temps correspondant à une technique d'accès avec collision,
dans lequel le premier intervalle de temps comprend une Trame Temporelle (TF pour "Time Frame") (25) ayant N Intervalle(s) de Temps de Trame (FTI pour "Frame Time Interval(s)") (23), ayant chacun une même durée D, et dans lequel N et D sont contenus dans l'information de gestion, émise par l'AP vers les stations, N étant un entier positif.

2. Le procédé selon la revendication 1, dans lequel N et/ou D de FTIs sont déterminés par l'AP pour chaque Super-Trame (11), chacun conformément à un algorithme respectif s'exécutant dans l'AP.

3. Le procédé selon la revendication 2, dans lequel l'algorithme de l'AP tient compte d'exigences de transmission reçues à partir des stations respectives, pour déterminer D et/ou N.

4. Le procédé selon l'une quelconque des revendications précédentes, dans lequel la TF est placé au début de la Super-Trame (11), directement après la transmission de la trame de gestion.

5. Le procédé selon l'une quelconque des revendications précédentes, dans lequel un protocole A est utilisé pendant la Super-Trame (11), sauf pendant la TF (25) pour laquelle un protocole B est utilisé, le protocole A et le protocole B étant différents.

6. Le procédé selon la revendication 5, dans lequel la multiplicité de stations inclut des stations conformes à la Norme IEEE 802.11, et dans lequel le protocole A et le protocole B sont des versions différentes de ladite Norme IEEE 802.11.

7. Le procédé selon la revendication 6, dans lequel l'élément d'information de FTI inclus dans la trame de gestion comprend un identificateur d'élément spécifique, qui est différent de ceux définis par la norme 802.11.

8. Le procédé selon la revendication 6 ou 7, dans lequel le premier intervalle de temps inclut un intervalle de temps géré par un mécanisme d'accès du type Fonction de Coordination par Point d'Accès (PCF pour "Point Coordination Function"), comme défini par la Norme IEEE 802.11.

9. Le procédé selon la revendication 6, 7 ou 8, dans lequel le premier intervalle de temps inclut un intervalle de temps géré par un mécanisme d'accès du type Fonction de Coordination Hybride (HCF pour "Hybrid Coordination Function"), comme défini par la norme 802.11.

10. Le procédé selon la revendication 9, dans lequel des stations ne gèrent aucun message reçu à travers le support de transmission partagé pendant la TF (25), lorsqu'elles ne reconnaissent pas l'identificateur d'élément spécifique et/ou ne supportent pas la version de protocole correspondant audit message.

11. Le procédé selon l'une quelconque des revendications précédentes, dans lequel l'AP répartit de façon dynamique une ressource de transmission entre les différentes techniques d'accès supportées, conformément aux caractéristiques des différentes exigences de transmission.

12. Un dispositif pour gérer un support de transmission partagé entre une multiplicité de stations dans un réseau local sans fil, le dispositif comprenant :
- un moyen pour émettre des trames de gestion périodiques vers toutes les stations, une Super-Trame (11) étant définie comme l'intervalle de temps entre le début d'une trame de gestion et le début de la trame de gestion suivante,
- un moyen pour diviser la Super-Trame (11) en une multiplicité d'intervalles de temps, ces intervalles de temps correspondant à des techniques d'accès respectives, conformément à une information de gestion contenue dans ladite trame de gestion, la Super-Trame comprenant :
- un premier intervalle de temps correspondant à une technique d'accès sans compétition,
- un deuxième intervalle de temps correspondant à une technique d'accès avec compétition,
dans lequel le premier intervalle de temps comprend une Trame Temporelle (TF pour "Time Frame") (25) ayant N Intervalle(s) de Temps de Trame (FTI pour "Frame Time Interval(s)") (23), ayant chacun une même durée D, et dans lequel N et D sont contenus dans l'information de gestion, émise par l'AP vers les stations, N étant un entier positif.
